# EUROPÄISCHE PATENTSCHRIFT

(11) **EP 1 135 635 B1**
(45) Veröffentlichungstag und Bekanntmachung des Hinweises auf die Patenterteilung: **08.09.2004**
(21) Anmeldenummer: 99973107.8
(22) Anmeldetag: 25.11.1999
(51) Int. Cl.: F16H 61/00, F16H 57/04

(54) **KÜHLUNG EINES STEUERGERÄTES EINES KRAFTFAHRZEUGGETRIEBES**
COOLING A CONTROL DEVICE OF THE GEARBOX OF A MOTOR VEHICLE
REFROIDISSEMENT D'UN APPAREIL DE COMMANDE DE BOITE DE VITESSES D'AUTOMOBILE

(30) Priorität: 01.12.1998 DE 19855321
(43) Veröffentlichungstag der Anmeldung: 26.09.2001
(73) Patentinhaber: ZF Batavia, L.L.C., Batavia, OH 45103 (US)
(72) Erfinder: SOMMER, Stefan, D-88348 Saulgau (DE); FESSLER, Bernd, D-88079 Kressbronn (DE)
(74) Vertreter: Zietlow, Karl-Peter
(86) Internationale Anmeldenummer: PCT/EP1999/009111
(87) Internationale Veröffentlichungsnummer: WO 2000/032967

(56) Entgegenhaltungen:
- EP-B- 0 697 080
- DE-A- 3 403 435
- DE-A- 19 517 491
- DE-A- 19 710 931

## Beschreibung

Die Erfindung betrifft ein Verfahren zur Reduzierung der Betriebstemperatur eines Steuergerätes eines Kraftfahrzeuggetriebes, insbesondere eines Automatgetriebes, und eine Getriebesteuerung mit einer Elektronikmodule aufweisenden Elektronikeinheit und einer Hydraulikeinheit, wobei das Steuergerät in einem teilweise mit Getriebeöl gefüllten Getriebegehäuse angeordnet und zumindest teilweise von Öl umgeben ist.

Aus der Praxis ist es bekannt, ein Steuergerät für ein Automatgetriebe außerhalb des Getriebegehäuses anzuordnen, und in dem Getriebegehäuse angeordnete Steuerelemente, wie Aktuatoren bzw. Stellglieder, über Leitungen mit dem Steuergerät zu verbinden.

Diese Lösung ist jedoch dahingehend nachteilhaft, daß eine lange Kabelführung zwischen Steuermitteln und Steuergerät erforderlich ist und für das außerhalb des Getriebegehäuses angeordnete Steuergerät zusätzlich Raum benötigt wird.

In der US 4,271,728 und in der EP 0 697 080 B1 wird eine Lösung vorgeschlagen, welche das Problem des zusätzlichen Raumbedarfs löst, indem das Steuergerät in dem Ölsumpf eines Getriebes angeordnet ist, wobei die elektrischen Verbindungen zwischen der Steuerelektronik und den Steuermitteln gemäß der EP 0 697 080 B1 als starre Drähte ausgebildet sind.

Zur Kühlung der Wärme produzierenden Steuerelektronik ist bei dieser bekannten Lösung das die Steuerelektronik umströmende Getriebeöl des Ölsumpfes vorgesehen, an das die Wärme z. B über Kühlfahnen abgegeben wird.

Die Kühlung der Steuerelektronik durch bloßes Umströmen des Getriebeöles erweist sich jedoch in Betriebssituationen mit hohen Getriebeöltemperaturen als problematisch. Insbesondere bei modernen Automatgetrieben kann das Getriebeöl Temperaturen von über 100 °C erreichen. Bei derartigen Betriebssituationen kann das Getriebeöl die von den Elektronikkomponenten der Steuerelektronik erzeugte Wärmemenge nicht mehr aufnehmen, und es tritt eine Überhitzung der Elektronikkomponenten auf. Die Folge sind Störungen in der Getriebesteuerung oder ein kompletter Ausfall der Steuerelektronik.

In der DE 197 10 931 A1 ist eine Getriebesteuerung insbesondere für ein Automatgetriebe bekanntgeworden, gemäß dem Oberbegriff des Anspruchs 2, bei dem das elektrohydraulische Steuergerät und das elektronische Steuergerät gemeinsam in einem Steuerungsgehäuse im oder unmittelbar am Getriebegehäuse angeordnet sind. Zur Kühlung des elektronischen Steuergerätes auf ein für es akzeptables Temperaturniveau ist eine spezielle Kühlkanalplatte mit Kühlkanälen vorgesehen, die räumlich zwischen dem elektrohydraulischen und dem elektronischen Steuergerät angeordnet ist. Die Kühlkanäle werden von Getriebeöl oder Motorkühlwasser durchströmt und liegen bevorzugt im Kühlerrücklauf.

Es ist daher Aufgabe der vorliegenden Erfindung, ein Verfahren zur Einstellung der Betriebstemperatur eines Steuergerätes eines Kraftfahrzeuggetriebes und eine Getriebesteuerung bereitzustellen, wobei das Steuergerät in einem Getriebegehäuse, von Getriebeöl umgeben, angeordnet ist und Elektronikmodule des Steuergerätes zuverlässig vor einer Überhitzung geschützt werden.

Diese Aufgabe wird gemäß den Merkmalen des Verfahrensanspruches 1 und des Vorrichtungsanspruches 2 gelöst.

Das erfindungsgemäße Verfahren zur gezielten Kühlung der Elektronikeinheit eines Steuergerätes und die erfindungsgemäße Ausgestaltung der Getriebesteuerung ermöglichen es, die Vorteile einer Anordnung des Steuergerätes im Ölsumpf des Getriebegehäuses mit einem entsprechend geringen Raumbedarf und kurzen Verbindungen zu den Stellgliedern zu nützen.

Darüber hinaus wird durch die erfindungsgemäße Lösung sichergestellt, daß die Verlustleistung von Elektronikmodulen zuverlässig abgeführt wird und deren Betriebstemperatur stets so niedrig gehalten wird, daß eine Störung durch eine örtliche Überhitzung auf einer Elektroplatine vermieden wird.

Dadurch wird jedoch nicht nur die Zuverlässigkeit der Getriebesteuerung erhöht, sondern auch die Lebensdauer der Elektronikkomponenten verlängert.

Weitere Vorteile und vorteilhafte Ausgestaltungen der Erfindung ergeben sich aus den Unteransprüchen und dem nachfolgend anhand der Zeichnung prinzipmäßig beschriebenen Ausführungsbeispiel.
Es zeigt:
- Fig. 1: eine schematisierte Darstellung eines Teiles eines Automatgetriebes mit einem in einem Ölsumpf angeordneten Steuergerät einer Getriebesteuerung;
- Fig. 2: eine Draufsicht auf eine Hydraulikeinheit des Steuergerätes gemäß Fig. 1 mit einer Kühleinrichtung und
- Fig. 3: einen Teilschnitt durch einen Kühlkanal der Kühleinrichtung entlang der Linie I-I in Fig. 1.

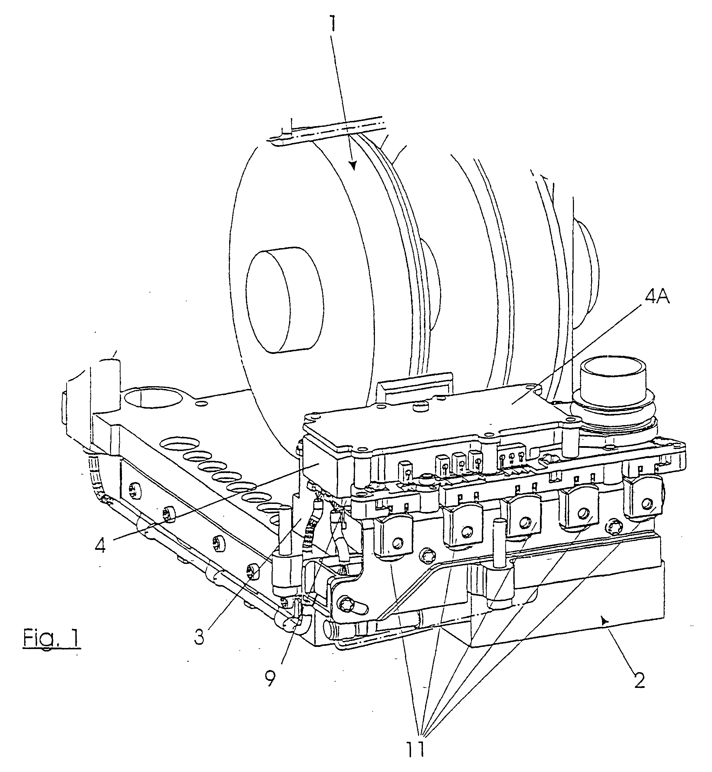

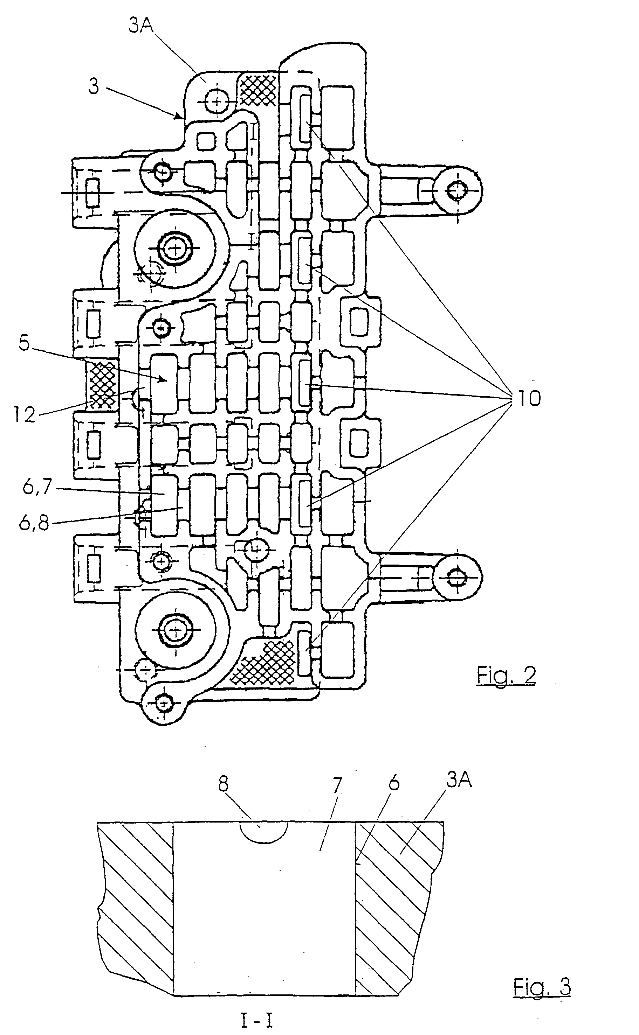

Bezug nehmend auf die Fig. 1 und 2 ist schematisch ein Teil eines Automatgetriebes für ein Kraftfahrzeug mit einem Variator 1 und einem Steuergerät 2 einer elektro-hydraulischen Getriebesteuerung ersichtlich, welche in einem nicht näher dargestellten Getriebegehäuse angeordnet sind.

Das Steuergerät 2, welches zur Übertragung von Signalen mit nicht näher bezeichneten elektrischen, mechanischen und hydraulischen Steuermitteln des Getriebes verbunden ist, weist eine Hydraulikeinheit 3 und eine Elektronikmodule (nicht ersichtlich) umfassende Elektronikeinheit 4 auf. In dem vorliegenden Ausführungsbeispiel ist das hydraulische Steuergerät 2 in dem Getriebegehäuse vollständig von Öl umgeben.

Um die Betriebstemperatur des Steuergerätes 2 und insbesondere der Elektronikeinheit 4 auch bei einer hohen Getriebeöltemperatur ϑ_ G auf einem niedrigen Niveau zu halten, weist das Steuergerät 2 eine Kühleinrichtung 5 auf, mittels der die Elektronikeinheit 4 mit einem definierten Volumenstrom eines Kühlmittels mit einer Temperatur ϑ_c, welche kleiner als die vorherrschende Getriebeöltemperatur ϑ_ G ist, angeströmt wird.

Als Kühlmittel wird Getriebeöl verwendet, welches vor der Zuführung an die Elektronikeinheit 4 in einem Getriebekühler (nicht dargestellt) gekühlt wird.

Wie in Fig. 2 ersichtlich, ist die Kühleinrichtung 5 in einem Ventilgehäuse 3A der Hydraulikeinheit 3 mit Kühlkanälen 6, welche an die Elektronikeinheit 4 grenzen, ausgebildet. Dabei weisen die Kühlkanäle 6 im Bereich von Elektronikmodulen, welche Leistungsbauelemente darstellen und eine entsprechend große Wärmemenge erzeugen, eine größere Querschnittsfläche und damit eine größere Wärmeaustauschfläche auf. Die Kühlkanäle 6 sind in dem Ventilgehäuse 3A als eine Art Labyrinth mit beckenartigen Erweiterungen 7 und schmalen Verbindungsnuten 8 ausgeformt.

Durch die Erweiterungen 7 und die Verbindungsnuten 8 wird die Strömungsgeschwindigkeit des Kühlmittels und damit die Wärmeaustauschzeit an unterschiedlichen Stellen in der Kühleinrichtung 5 in Abhängigkeit von der Wärmeerzeugung der Elektronikmodule der Elektronikeinheit 4 auf definierte Weise variiert.

Die Elektronikeinheit 4 weist zur Hydraulikeinheit 3 hin eine Grundplatte 9 aus Aluminium auf, auf der eine Keramikplatte (nicht ersichtlich) mit Elektronikmodulen aufgeklebt ist. Nach oben ist die Elektronikeinheit 4 mit einem Deckel 4A dichtend gegenüber dem Ölsumpf abgeschlossen.

Die Fig. 2, welche eine Draufsicht auf die Hydraulikeinheit 3 mit den Kühlkanälen 6 ohne die Elektronikeinheit 4 und ihrer Grundplatte 9 ist, zeigt, daß die Kühlkanäle 6 zu der Grundplatte 9 hin offen ausgebildet sind. Dadurch wird die Grundplatte 9 bei größtmöglicher Wärmeaustauschfläche direkt mit Kühlmittel überströmt.

Der Volumenstrom des Kühlmittels ist derart vorgesehen, daß das Kühlmittel von einer Getriebekühlung (nicht dargestellt) kommend durch Eintrittsöffnungen 10 im Bereich von Aktuatoren 11 des Steuergerätes 2 in die Hydraulikeinheit 3 eingespeist wird. Von den Eintrittsöffnungen 10 tritt das Kühlmittel in den Kühlkanälen 6 nach oben und überströmt die Grundplatte 9. Danach wird es über Austrittsöffnungen 13 in den Ölsumpf abgeleitet.

Die Kühlung ist in dem vorliegenden Ausführungsbeispiel bei Bedarf zuschaltbar, wobei die Elektronikeinheit 4 in Abhängigkeit ihrer von einer Sensorik ermittelten Betriebstemperatur geregelt gekühlt wird.

Selbstverständlich kann aber auch vorgesehen sein, daß die Elektronikeinheit 4 gekühlt wird, wenn die Getriebeöltemperatur ϑ_ G einen vordefinierten Grenzwert ϑ_ grenz übersteigt.

### Bezugszeichen

- 1: Variator
- 2: Steuergerät
- 3: Hydraulikeinheit
- 3A: Ventilgehäuse
- 4: Elektronikeinheit
- 4A: Deckel
- 5: Kühleinrichtung
- 6: Kühlkanal
- 7: Erweiterung
- 8: Verbindungsnut
- 9: Grundplatte
- 10: Eintrittsöffnung
- 11: Aktuator
- 12: Austrittsöffnung

## Patentansprüche

1. Verfahren zur Einstellung der Betriebstemperatur eines Steuergerätes eines Kraftfahrzeuggetriebes, insbesondere eines Automatgetriebes, mit einer Elektronikmodule aufweisenden Elektronikeinheit und einer Hydraulikeinheit, wobei das Steuergerät in einem teilweise mit Getriebeöl gefüllten Getriebegehäuse angeordnet ist und zumindest teilweise von Öl umgeben ist, wobei wenigstens ein Teil der Elektronikeinheit (4) des Steuergerätes (2) durch ein Kühlmittel mit einer Temperatur ϑ_c, welche kleiner als die vorherrschende Getriebeöltemperatur ϑ_ G ist, gekühlt wird, und wobei die Elektronikeinheit (4) mit einem definierten Volumenstrom des Kühlmittels angeströmt wird und wobei als Kühlmittel insbesondere Getriebeöl verwendet wird, welches vor der Zuführung an die Elektronikmodule in einem Getriebekühler gekühlt wird, **dadurch gekennzeichnet, daß** die Wärmeaustauschfläche und/oder die Wärmeaustauschzeit und/oder die Temperatur ϑ_c des Kühlmittels in Abhängigkeit von der Wärmeerzeugung des angeströmten Teils der Elektronikeinheit (4) gewählt wird, mit der größten Wärmeaustauschfläche und/oder einer minimalen Strömungsgeschwindigkeit des Kühlmittels im Bereich von Leistungsbauelementen darstellenden Elektronikmodulen, daß die Elektronikeinheit (4) bei einer Getriebeöltemperatur ϑ_ G, die größer als ein vordefinierter Grenzwert ϑ_ grenz ist, gekühlt wird und daß die Elektronikeinheit (4) in Abhängigkeit ihrer von einer Sensorik ermittelten Betriebstemperatur geregelt gekühlt wird.

2. Getriebesteuerung für ein Kraftfahrzeuggetriebe, insbesondere Automatgetriebe, mit einem teilweise mit Öl gefüllten Gehäuse, in dem ein Steuergerät mit einer Elektronikmodule umfassenden Elektronikeinheit und einer Hydraulikeinheit angeordnet ist, wobei das Steuergerät zumindest teilweise von Öl umgeben ist, wobei das Steuergerät (2) eine Kühleinrichtung (5) aufweist, mittels der wenigstens ein Teil der Elektronikeinheit (4) des Steuergerätes (2) mit einem Kühlmittel mit einer Temperatur ϑ_c, welche kleiner als die vorherrschende Getriebeöltemperatur ϑ_ G ist, anströmbar ist, und wobei die Kühleinrichtung (5) mit Kühlkanälen (6), welche an die Elektronikeinheit (4) grenzen, in der Hydraulikeinheit (3) ausgebildet ist, **dadurch gekennzeichnet , daß** die Kühlkanäle (6) im Bereich von Leistungsbauelementen darstellenden Elektronikmodulen die größte Wärmeaustauschfläche aufweisen und daß die Kühlkanäle (6) zu einer Grundplatte (9) der Elektronikeinheit (4), auf der die Elektronikmodule angeordnet sind, offen ausgebildet sind.

3. Getriebesteuerung nach Anspruch 2, **dadurch gekennzeichnet, daß** die Kühlkanäle (6) in der Hydraulikeinheit (3) als Labyrinth ausgebildet sind, wobei das Kühlmittel von einer Getriebekühlung kommend durch Eintrittsöffnungen (10) im Bereich von Aktuatoren (11) des Steuergerätes (2) in die Hydraulikeinheit (3) eintritt, die Grundplatte (9) überströmt und über Austrittsöffnungen (12) in den ölsumpf abgeleitet ist.

4. Getriebesteuerung nach Anspruch 2 oder 3, **dadurch gekennzeichnet , daß** das Steuergerät (2) eine Sensorik und Regelung zur geregelten Kühlung der Elektronikeinheit (4) aufweist.

## Claims

1. Method for adjusting the operating temperature of a control unit of an automotive transmission, especially of an automatic transmission, with an electronic unit comprising electronic modules, and with a hydraulic unit, with the control unit being arranged in a transmission housing partly filled with transmission oil and being at least partly surrounded by oil, with at least part of the electronic unit (4) of the control unit (2) being cooled by a coolant of a temperature of _ C, which is lower than the prevailing transmission oil temperature of _ C, and with the electronic unit (4) being supplied by a defined volumetric flow of the coolant and with especially transmission oil being used as coolant, which is cooled in a transmission cooler before being fed to the electronic modules, **characterized in that** the heat-exchanging surface and/or the heat-exchanging period and/or the temperature _ C of the coolant are/is selected in relation to the heat produced by the part of the electronic unit (4) supplied, with the maximum heat-exchanging surface and /or a minimum flow velocity of the coolant in the areas of electronic modules constituting power components, that the electronic unit (4) is cooled at a transmission oil temperature _ G, which exceeds a predefined limit value of _ limit, and that the electronic unit (4) is cooled in relation to its operating temperature, which is determined by sensors.

2. Transmission control unit for an automotive transmission, especially for an automatic transmission with a partly oil-filled housing accommodating a control unit with an electronic unit comprising electronic modules and a hydraulic unit, with the control unit being at least partly surrounded by oil, with the control unit (2) featuring a cooling device (5), by means of which at least part of the electronic unit (4) of the control unit (2) can be supplied with a coolant at a temperature of _C, which is lower than the prevailing transmission oil temperature _ G, and with the cooling device (5) being equipped with cooling ducts (6) in the hydraulic unit (3), which border on the electronic unit (4), **characterized in that** the cooling ducts (6) possess the maximum heat-exchanging surface in the areas of electronic modules constituting power components and that the cooling ducts (6) form an open baseplate (9) of the electronic unit (4), on which the electronic modules are arranged.

3. Transmission control unit according to claim 2, **characterized in that** the cooling ducts (6) in the hydraulic unit (3) constitute a labyrinth and that the coolant arriving from a transmission cooler enters the hydraulic unit (3) through entrance ports (10) in the area of the actuators (11) of the control unit (2), overflows the baseplate (9) and is discharged into the oil sump through outlet orifices.

4. Transmission control unit according to claim 2 or 3, **characterized in that** the control unit (2) features sensors and a control for controlled cooling of the electronic unit (4).

## Revendications

1. Méthode de réglage de la température de fonctionnement d'un bloc électronique d'une transmission d'un véhicule automobile, et en particulier d'une transmission automatique, dotée d'une unité électronique comportant des modules électroniques et un bloc hydraulique, sachant que le bloc électronique est disposé dans un carter de boîte de vitesses rempli partiellement d'huile de boîte de vitesses et environné au moins partiellement d'huile, sachant que qu'au moins une partie de l'unité électronique (4) du bloc électronique (2) est refroidie par un réfrigérant ayant une température θ_c, laquelle est inférieure à la température existante de la boîte de vitesses θ_G, et sachant que l'unité électronique (4) est mise sous pression avec un réfrigérant, dont le débit volumétrique est prédéfini, et sachant qu'en tant que produit réfrigérant est utilisé en particulier de l'huile de boîte de vitesses, celle-ci étant refroidie dans un refroidisseur de boîte de vitesses, avant de l'amener aux modules électroniques, **caractérisée en ce que** la surface d'échange de chaleur et/ou le temps d'échange de chaleur et/ou la température θ_c du réfrigérant sont choisis en fonction de la capacité de production de chaleur de la partie pressurisée de l'unité électronique (4), la surface d'échange de chaleur la plus grande et/ou la vitesse d'écoulement minimale du réfrigérant étant au niveau des modules électroniques représentant des éléments de puissance, **en ce que** l'unité électronique (4) est refroidie à une température de boîte de vitesses θ_G, étant supérieure à une valeur limite θ_limite prédéfinie, et **en ce que** l'unité électronique (4) est refroidie de manière contrôlée et en fonction de sa température de fonctionnement déterminée par des capteurs.

2. Unité de commande électronique d'une transmission d'un véhicule automobile, en particulier d'une transmission automatique, dotée d'un carter rempli partiellement d'huile, dans lequel sont disposés un bloc électronique avec une unité électronique comportant des modules électroniques et une unité hydraulique, sachant que le bloc électronique (2) est environné au moins partiellement d'huile, sachant que le bloc électronique (2) comporte un dispositif de refroidissement (5), au moyen duquel au moins une partie de l'unité électronique (4) du bloc électronique (2) peut être pressurisée par un réfrigérant ayant une température θ_c, laquelle est inférieure à la température existante de la boîte de vitesses θ_G, et sachant qu'à l'intérieur du bloc hydraulique (3) le dispositif de refroidissement (5) est formé de canaux de refroidissement (6) confinant avec l'unité électronique (4), **caractérisée en ce que** les canaux de refroidissement (6) ont, au niveau des modules électroniques représentant des éléments de puissance, la surface d'échange de chaleur la plus grande et **en ce que** les canaux de refroidissement (6) sont ouverts et réalisés sous forme d'une plaque de base (9) de l'unité électronique (4) sur laquelle sont disposés les modules électroniques.

3. Unité de commande électronique d'une transmission selon la revendication 2, **caractérisée en ce que** les canaux de refroidissement (6) à l'intérieur du bloc hydraulique (3) sont réalisés sous forme d'un labyrinthe, sachant que le réfrigérant, arrivant d'un système de refroidissement de la boîte de vitesses, entre - par des orifices d'admission (10), se trouvant au niveau d'actionneurs (11) du bloc électronique (2) - dans le bloc hydraulique (3), **en ce qu'**il s'écoule sur la plaque de base (9) et **en ce qu'**il est dérivé à travers les orifices de sortie (12) dans le bac à huile.

4. Unité de commande électronique d'une transmission selon une des revendications 2 ou 3, **caractérisée en ce que** le bloc électronique (2) comporte des capteurs et des régulateurs pour gérer le refroidissement contrôlé de l'unité électronique (4).
